# EUROPEAN PATENT APPLICATION

(11) **EP 1 575 048 A2**
(43) Date of publication of application: **14.09.2005**
(21) Application number: 05250665.6
(22) Date of filing: 05.02.2005
(51) Int. Cl.: G11B 20/10, G06F 3/06

(54) **Optical recording/reproducing apparatus**

(30) Priority: 09.03.2004 KR 2004015779
(71) Applicant: SAMSUNG ELECTRONICS CO., LTD., Kyungki-do (KR)
(72) Inventor: Choi, Jun-ho, Yeongdeungpo-gu Seoul (KR)
(74) Representative: Waddington, Richard

(57) **Abstract**

An optical recording/reproducing apparatus, wherein a main processing unit includes a codec (124) operable to read out record data recorded on an optical disk (100a) and compress the record data in a predetermined manner and decompress the reproduction data, and two transmitting interfaces (126,128) connected to the optical disk drive (170) and the recording medium (180), respectively, and at least one bus is arranged between the optical disk drive (170), recording medium (180), and main processing unit to transmit data, and the optical disk drive (170) and the recording medium (180) are connected to first and second interfaces of two transmitting interfaces (126,128) through the bus, respectively to communicate data to the codec (124). As such, two ATAPI interfaces are arranged, so that data processing performance is enhanced even when the optical disk drive (170) and the HDD for performing recording or reproducing operation are implemented at the same time.

## Description

The present invention relates to an optical recording/reproducing apparatus, and in particular, to an optical recording/reproducing apparatus having at least two ATAPI interfaces in a codec.

The optical recording/reproducing apparatus generally operates to allow data to be recorded on an optical disk or allows recorded data to be reproduced by means of optical disk drive. In recent years, developments have been focused on a Digital Video Disk Player (DVDP) having a hard disk drive (HDD) as the optical recording/reproducing apparatus. The HDD may be randomly accessed, and allows mass storage recording and fast data transmission, so that it is highly useful for Audio & Video (AV) data storage.

In the meantime, the HDD and the optical disk drive perform data communication in accordance with AT Attachment Packet Interface (ATAPI) standard. The single interface supporting the ATAPI communication is connectable to two separate devices, and is generally included in the codec for compressing and decompressing AV data. As such, the HDD and the optical disk drive may be connected to one ATAPI interface so that data thereof may be processed at the same time.

By way of example, a conventional optical recording/reproducing apparatus receives data recorded in the HDD through the ATAPI interface, and decompresses the data to be reproduced while transmitting AV data transmitted from an external video source to the optical disk drive to be recorded through the ATAPI interface.

The conventional optical recording/reproducing apparatus, however, has a problem that the HDD and the optical disk drive, which are connected to the one ATAPI interface, perform data processing at the same time thereby degrading data processing performance. In other words, when data is recorded on the HDD and the optical disk drive or when recorded data is reproduced, data processing speed decreases due to a load on the ATAPI bus.

The present invention provides an optical recording/reproducing apparatus overcoming performance deterioration resulting from concurrent data transfer of the HDD and the optical disk drive.

According to the present invention there is provided an apparatus and method as set forth in the appended claims. Preferred features of the invention will be apparent from the dependent claims, and the description which follows.

In one aspect of the present invention there is provided an optical recording/reproducing apparatus including a predetermined recording medium, and an optical disk drive recording record data on an optical disk by irradiating a predetermined light on the optical disk, and reading out reproduction data recorded on the optical disk; a main processor including a codec compressing the record data in a predetermined manner and decompressing the reproduction data, and at least two transmitting interfaces connected to the optical disk drive and the recording medium, respectively; and at least one bus transmitting data, arranged between the optical disk drive, the recording medium, and the main processor, wherein the optical disk drive and the recording medium are connected to first and second interfaces of the at least two transmitting interfaces through the at least one bus, respectively to communicate data to the codec.

Preferably, the at least one bus has at least one master terminal and at least one slave terminal to support the data communication, and has a first bus connecting the first interface to the optical disk drive and a second bus connecting the second interface to the recording medium.

Preferably, the at least two transmitting interfaces and the first and second bus support ATAPI communication.

Preferably, the master terminals of the first and second buses are connected to the optical disk drive and the recording medium respectively, which may be capable of supporting the ATAPI communication.

Preferably, any one of the slave terminals of the first and second interfaces is connected to a memory controller converting a standard of an external memory card to that of the ATAPI.

Preferably, the main processor further includes a controller, which selects at least one of the optical disk drive and the recording medium connected to the at least two transmitting interfaces, and controls the codec and the at least two transmitting interfaces to have the selected at least one operated in at least one of a recording mode or a reproducing mode.

The main processor is preferably a single chip where the codec, the at least two transmitting interfaces, and the controller are preferably embedded in one integrated circuit, and the recording medium is a hard disk drive.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a schematic block diagram showing an optical recording/reproducing apparatus in accordance with an embodiment of the present invention; and
FIG. 2 is a schematic diagram showing how an optical disk drive and a HDD are mounted in first and second ATAPI interfaces shown in FIG. 1.

Reference will now be made in detail to the embodiments of the present invention, examples of which are illustrated in the accompanying drawings, wherein like reference numerals refer to the like elements throughout. The embodiments are described below to explain the present invention by referring to the figures.

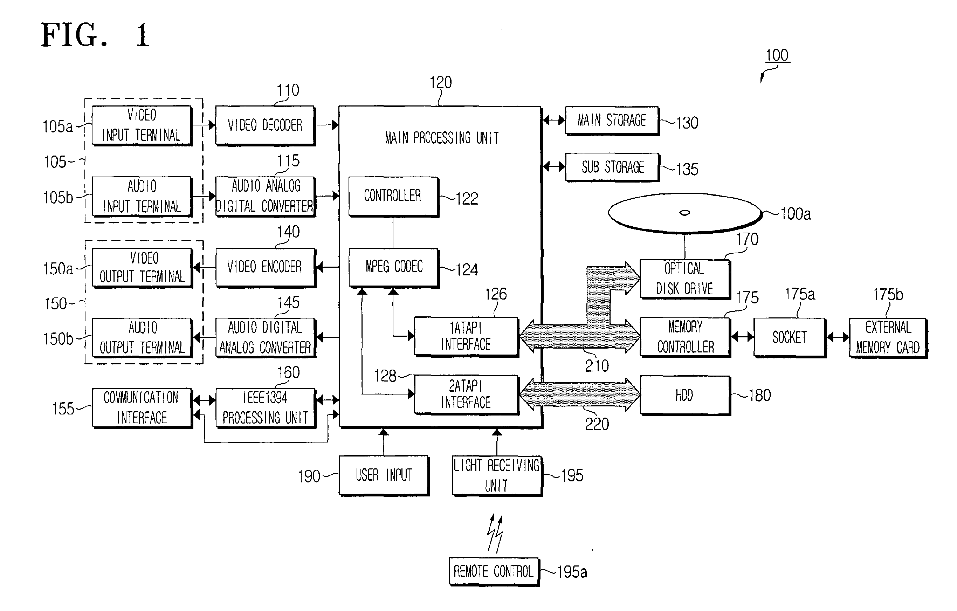

FIG. 1 is a schematic block diagram showing an optical recording/reproducing apparatus in accordance with an embodiment of the present invention. Referring to FIG. 1, the optical recording/reproducing apparatus 100 comprises, an input terminal 105, a video decoder 110, an audio Analog Digital Converter (ADC) 115, a main processing unit 120, a main storage 130, a sub storage 135, a video encoder 140, an audio Digital Analog Converter (DAC) 145, an output terminal 150, a communication interface 155, an IEEE1394 processing unit 160, an optical disk drive 170, a memory controller 175, a hard disk drive (HDD) 180, a user input 190, and a light receiving unit 195.

First, the optical recording/reproducing apparatus 100 processes reproduction data recorded on an optical disk 100a to reproducible signals and provides them to a TV or other display, and records recording data provided from a video source on the optical disk 100a. Hereinbelow, the optical recording/reproducing apparatus 100 will be described mainly based on blocks associated with the present invention for simplicity of description.

Examples of the optical recording/reproducing apparatus 100 may include a Digital Video Disk Player (DVDP), a Digital Video Disk Recorder (DVDR), and a Digital Video Recorder (DVR), and examples of the optical disk 100a may include DVD, VCD, and CD based disks, as well as Bluray, Advanced Optical Disks (AOD), and/or magneto optical disks.

The input terminal 105 includes a video input terminal 105a and an audio input terminal 105b.

The video input terminal 105a receives various video signals provided from a predetermined video source to provide them to the video decoder 110. The video input terminal 105a includes at least one of a super video input terminal (not shown) to receive a luminance signal (Y) and a color signal (Color) in digital type signals, a line video input terminal (not shown) to receive T/Cr/Cr signals, a RF input terminal (not shown) to receive public broadcasting signals, or a terminal (not shown) for receiving CVBS signals.

The audio input terminal 105b receives audio signals provided from the predetermined video source, comprising audio and video components, to provide them to the audio ADC 115. The video source may include a wired broadcast source, a satellite broadcast source, Internet, a set top box, or a digital camcorder.

The video decoder 110 transmits received video signals to an MPEG codec 124 when the received audio signals are digital, and decodes the video signals into digital signals before transmission to the MPEG codec124 when the received video signals are analog.

The audio ADC 115 transmits received audio signals to the MPEG codec 124 when the received audio signals are digital, and converts the received audio signals into digital signals when the received audio signals are analog.

The main processor 120 processes a user control signal received through the user input 190 or the light receiving unit 195, and controls general operation of the optical recording/reproducing apparatus 100 in response to a control program stored in the main storage 130.

The main processor 120 is implemented such that a controller 122, the MPEG codec 124, and at least two transmitting interfaces (1ATAPI interface and 2ATAPI interface) 126 and 128, respectively, are embedded in one chip such as an integrated circuit according to an aspect of the present invention. However, it is understood that these elements may be implemented on more than one chip with some degradation in performance.

Such a one chip configuration has a better performance as well as simplifies the necessary peripheral components compared to a circuit configured to employ separate components. Thus, the single chip configuration is used as an essential component for implementing the optical recording/reproducing apparatus' light weight and small size.

The controller 122 selects at least one of the optical disk drive 170 or the HDD 180, which are coupled with the at least two transmitting interfaces 126 and 128, respectively, and controls the MPEG codec 124 and the at least two transmitting interfaces 126 and 128 to have the selected one operated in at least one of a recording mode or a reproducing mode.

The MPEG codec 124 compresses AV signals provided from the video decoder 110 and the audio ADC 115 in a predetermined MPEG manner to generate MPEG streams. By way of example, the MPEG codec 124 compresses video data provided from the video decoder 110 according to a MPEG-2 Video standard, and compresses audio data provided from the audio ADC 115 according to an AC-3 standard. Compressed AV signals are recorded on the optical disk drive 170 or the HDD 180. It is understood that other types of MPEG standards may be substituted such as MPEG-4, that other versions of Dolby audio standards may be used as well, and that other audio and/or video standards can be used.

When AV signals recorded on the optical disk drive 170 or the HDD 180 are to be reproduced, the MPEG codec 124 decompresses compressed AV signals read from the optical disk drive 170 or the HDD 180 according to an MPEG standard. The MPEG codec 124 then provides the decompressed video signals and audio signals to the video encoder 140 and the audio DAC 145, respectively.

Furthermore, when AV signals recorded on the optical disk drive 170 are to be recorded onto the HDD 180, the MPEG codec 124 provides the AV signals read from the optical disk drive 170 to the HDD 180. Similarly, for a case of recoding AV signals that are recorded on the HDD 180 onto the optical disk drive 170, the MPEG codec 124 transmits the AV signals to the optical disk drive 170.

At least two transmitting interfaces 126 and 128 are capable of supporting ATAPI communication, and hereinafter, first and second ATAPI interfaces will be referred to as the two interfaces by way of example.

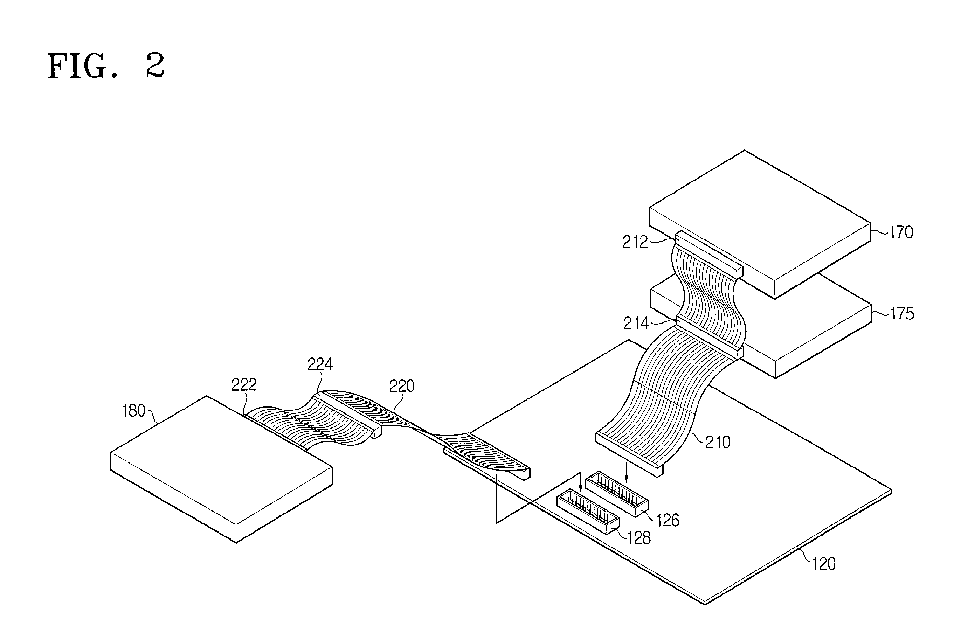

FIG. 2 is a schematic diagram showing how the optical disk drive and the HDD are coupled with the first and second ATAPI interfaces shown in FIG. 1.

Referring to FIG.1 and FIG. 2, the first and second buses 210 and 220 are capable of supporting ATAPI communication, and are arranged between the main processor 120, the optical disk drive, 170, and the HDD 180 to transmit data.

The first bus 210 connects the first ATAPI interface 126 to the optical disk drive 170 to support mutual data communication, and the second bus 220 connects the second ATAPI interface 128 to the HDD 180 to support mutual data communication.

In addition, each of the first and second buses 210 and 220 has at least one master terminal 212 and 222 and at least one slave terminal 214 and 224, respectively. As a result, at least two devices capable of performing ATAPI communication may be mounted in each of the first and second buses 210 and 220.

In embodiments of the present invention, the optical disk drive 170 is connected to the master terminal 212 of the first bus 210 and the memory controller 175 is connected to the slave terminal 214, and the HDD 180 is connected to the master terminal 222 of the second bus 220 and a device (not shown) capable of performing ATAPI communication is connected to the slave terminal 224.

In this case, the memory controller 175 is one that converts data encoded according to a communication standard of an external memory card 175b to the integrated ATAPI standard. The memory controller 175 is connected to the external memory card 175b by means of a predetermined socket 175a. Examples of the external memory card 175b may include a Multimedia Card (MMC), a Smart Media (SM) Card, a Memory Stick (MS), a Secure Digital (SD) Card, a Compact Flash (CF) Card, a Micro Drive (MD) card, and so forth.

Hereinafter, various examples of recording and/or reproducing predetermined AV signals through the first and second ATAPI interfaces will be described.

First, compressed AV signals provided from the MPEG codec 124 are recorded on the optical disk 100a through the first ATAPI interface 126, the first bus 210, and the optical disk drive 170.

Second, compressed AV signals provided from the MPEG codec 124 are recorded on the HDD 180 through the second ATAPI interface 128 and the second bus 220.

Third, when AV signals recorded on the optical disk 100a are recorded onto the HDD 180, these AV signals are recorded on the HDD 180 through the first bus 210, the first ATAPI interface 126, the MPEG codec 124, the second ATAPI interface 128, and the second bus 220.

Fourth, when AV signals recorded on the HDD 180 are recorded onto the optical disk drive 170, these AV signals are recorded on the optical disk drive 170 through the second bus 220, the second ATAPI interface 128, the MPEG codec 124, the first ATAPI interface 126, and the first bus 210.

Fifth, when AV signals recorded on the optical disk 100a are reproduced, these AV signals are provided to the video encoder 140 and the audio DAC 145 through the first bus 210, the first ATAPI interface 126, and the MPEG codec 124.

Sixth, when AV signals recorded on the HDD 180 are reproduced, these AV signals are provided to the video encoder 140 and the audio DAC 145 through the second bus 220, the second ATAPI interface 128, and the MPEG codec 124.

As such, the optical disk drive 170 and the HDD 180 are connected to the first and second ATAPI interfaces 126 and 128, respectively, to perform data communication, so that AV signals are recorded or reproduced with enhanced processing performance even when the optical disk drive 170 and the HDD 180 are implemented at the same time. In other words, the optical disk drive 170 and the HDD 180 associated with at least two embodiments among the above-mentioned examples may be driven without any performance degradation at the same time.

By way of example, AV signals input from the input terminal 105 are recorded on the optical disk 100a through the optical disk drive 170 while compressed AV signals recorded on the HDD 180 are decompressed to be reproduced, wherein the optical disk drive 170 is connected to the first ATAPI interface 126 and the HDD 180 is connected to the second ATAPI interface 128, which allows the optical recording/reproducing apparatus 100 to perform data communication (i.e., transmission of AV signals) at a faster speed.

Referring back to FIG. 1, the main storage 130 stores a control program and operating system for controlling and managing general operations of the optical recording/reproducing apparatus 100, and flash memory is employed for the same in aspects of the present invention.

The sub storage 135 is a temporary storage for the main processor 120 to use as needed. The sub storage 135 maybe, for example, Synchronous Dynamic RAM (DRAM).

The output terminal 150 includes a video output terminal 150a and an audio output terminal 150b. The video encoder 140 encodes decompressed video signals output from the MPEG codec 124 and provides them to the video output terminal 150a. The audio DAC 145 converts decompressed audio signals output from the MPEG codec 124 to analog audio signals and provides them to the audio output terminal 150b.

The video output terminal 150a and the audio output terminal 150b provide analog AV signals provided from the video encoder 140 and the audio DAC 145 to a video display means such as Cathode Ray tube (CRT) and Liquid Crystal Display (LCD), and to a sound output device such as a speaker or headphones, respectively. In this case, analog AV signals provided from the video encoder 140 and the audio DAC 145 are ones provided from the input terminal 105, or ones recorded on the HDD 180 or the optical disk 100a. It is understood that when only one type of data, such as only video signals or only audio signals, are stored on the HDD 180 or the optical disk 100a, that the output terminal 150a or 150b and the corresponding video encoder 140 or audio DAC 145 which is not needed is not used during operation of the optical recording/reproducing apparatus 100.

The communication interface 155 is one capable of supporting data communication with an external device (e.g., camcorder). The communication interface 155 may be, for example, an IEEE1394 interface a, USB interface and so forth.

The IEEE1394 processing unit 160 converts data in a DV format to data in an IEEE 1394 format to provide them to the MPEG codec 124 when the camcorder capable of supporting the DV format is connected to the communication interface 155. However, it is understood that the communication interface 155 and the IEEE 1394 processing unit 160 need not be used in all aspects of the present invention.

The optical disk drive 170 records AV signals provided from the MPEG codec 124 on the optical disk 100a by means of an optical pickup (not shown) in a recording mode. In addition, the optical disk drive 170 detects the AV signals recorded on the optical disk 100a, converts the detected AV signals to digital data, and provides the digital signals to the MPEG codec 124 in a reproducing mode.

The optical disk drive 170 includes a servo processing unit performing various servo operations such as tracking servo and focusing servo, optical pickup, Digital Signal Processor (DSP), and spindle motor.

The HDD 180 is applied as a predetermined recording medium in the optical recording/reproducing apparatus 100. Still image files, AV files, music files, and other types of data are stored in the HDD 180. In accordance with embodiments of the present invention, the optical disk drive 170 and the HDD 180 are capable of performing ATAPI communication.

The user input 190 is a user interface receiving instructions of selecting or setting various functions, which are supported by the optical recording/reproducing apparatus 100. To that end, various function keys, direction keys, and number keys are arranged in the user input 190 for selective activation by a user.

The light receiving unit 195 receives user control signals such as infrared rays transmitted from an external input device such as a remote control 195a and provides them to the main processing unit 120.

As mentioned above, in accordance with aspects of the present invention, at least two ATAPI interfaces are embedded in the MPEG codec, and each of interfaces are connected to the optical disk drive and the HDD. The at least two ATAPI interfaces and the MPEG codec are implemented as a single chip. As a result, configuration of peripheral components may be simplified, and data recording or reproducing performance may be enhanced when the optical disk drive and the HDD are driven at the same time, compared to a circuit employing separate components.

While described in terms of ATAPI interfaces, it is understood that other types of communication interface standards may be used and/or developed.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical recording/reproducing apparatus, comprising:
a predetermined recording medium (180);
an optical disk drive (170) operable to record a record data on an optical disk (100a) by irradiating a predetermined light on the optical disk (100a), and operable to read out a reproduction data recorded on the optical disk (100a);
a main processor (120) including a codec (124) operable to compress the record data in a predetermined manner and decompress the reproduction data, and a first transmitting interface (126) connected with the optical disk drive (170) and a second transmitting interface (128) connected with the predetermined recording medium (180); and
at least one bus (210/220) transmitting data, arranged between the optical disk drive (170), the predetermined recording medium (180), and the main processor (120),
wherein the optical disk drive (170) and the predetermined recording medium (180) are connected to first and second interfaces of the first and second transmitting interfaces (126, 128) through the bus (210/220), respectively, to communicate data with the codec (124).

2. The optical recording/reproducing apparatus as claimed in claim 1, wherein the at least one bus (210/220) comprises a first bus (210) connecting the first interface with the optical disk drive (170) and a second bus (210) connecting the second interface with the predetermined recording medium (180), and each of the first and second buses (210, 220) includes at least one master terminal (212,222) and at least one slave terminal (214,224).

3. The optical recording/reproducing apparatus as claimed in claim 2, wherein the first and second transmitting interfaces (126, 128) and the first bus (210) and the second bus (220) support ATAPI communication.

4. The optical recording/reproducing apparatus as claimed in claim 3, wherein the master terminal (212,222) of the first bus (210) is connected to the optical disk drive (170) and the second bus (220) is connected to the predetermined recording medium (180) and the master terminals (212,222) each support the ATAPI communication.

5. The optical recording/reproducing apparatus as claimed in claim 3 or claim 4, wherein at least one of the slave terminals (214,224) of the first and second buses (210, 220) is connected to a memory controller (175) converting a standard of an external memory card to the ATAPI standard.

6. The optical recording/reproducing apparatus as claimed in any preceding claim, wherein the main processor (120) further comprises a controller (122), which selects at least one of the optical disk drive (170) and the predetermined recording medium (180) connected with the at least two transmitting interfaces (126,128), and controls the codec (124) and the at least two transmitting interfaces (126,128) to have the selected one operated in at least one of a recording mode or a reproducing mode.

7. The optical recording/reproducing apparatus as claimed in claim 6, wherein the main processor (120) is a single-chip where the codec (124), the at least two transmitting interfaces (126,128), and the controller (122) are embedded in one integrated circuit.

8. The optical recording/reproducing apparatus as claimed in any preceding claim, wherein the predetermined recording medium (180) is a hard disk drive.

9. A recording/reproducing apparatus, comprising:
a first drive (170) having a first information storage medium (100a);
a second drive (180) having a second information storage medium;
a processor (120) comprising a first interface coupled with the first drive (170) and a second interface coupled with the second drive (180); and
at least one bus (210/220) transmitting data between the processor (120) and the first information storage medium (100a) and the second information storage medium,
wherein the processor (120) reproduces data from or writes data to a selected one of the first information storage medium (100a) or the second information storage medium via the first interface and the second interface, respectively, through the bus (210/220) .

10. The apparatus of claim 9, wherein the processor (120) further comprises:
a codec (124) which is operable to compress the data according to a predetermined format when the processor (120) is writing to the selected one of the first information storage medium (100a) or the second information storage medium and is operable to decompress the data when the processor (120) is reproducing from the selected one of the first information storage medium (100a) or the second information storage medium.

11. The apparatus of claim 10, wherein the first information storage medium (100a) is an optical disk (100a) and the second information storage medium is a hard disk.

12. The apparatus of any one of claims 9 to 11, wherein the processor (120)is operable to reproduce the data from the selected one of the first information storage medium (100a) or the second information storage medium, and is operable to write the reproduced data to the other one of the first information storage medium (100a) or the second information storage medium, by communicating through the respective first and second interfaces.

13. The apparatus of any one of claims 9 to 12, wherein the first interface and the second interface of the processor (120) are operable to communicate according to the ATAPI standard.

14. The apparatus of claim 13, wherein the at least one bus (210/220) comprises a first bus (210) operable to communicate with the first interface and the first information storage medium (100a), and a second bus (220) operable to communicate with the second interface and the second information storage medium.

15. The apparatus of claim 14, wherein each of the first bus and the second bus (220) comprises a master terminal (212,222) and a slave terminal (214,224), and each of the master terminals (212,222) are coupled with the first drive (170) and the second drive (180), respectively.

16. The apparatus of claim 15, wherein the processor (120) is an integrated circuit.
